# EUROPÄISCHE PATENTANMELDUNG

(11) **EP 2 554 360 A1**
(43) Veröffentlichungstag der Anmeldung: **06.02.2013**
(21) Anmeldenummer: 11176138.3
(22) Anmeldetag: 01.08.2011
(51) Int. Cl.: B29C 67/00

(54) **Generativ hergestelltes Bauteil mit wenigstens einer Marke und Verfahren zum Ausbilden, Reparieren und/oder Austauschen eines derartigen Bauteils**

(71) Anmelder: MTU Aero Engines GmbH, 80995 München (DE)
(72) Erfinder: Dr. Bamberg, Joachim, 85221 Dachau (DE); Dr. Hessert, Roland, 82211 Herrsching (DE)

(57) **Zusammenfassung**

Die Erfindung betrifft ein Bauteil, insbesondere Triebwerksbauteil, welches wenigstens eine Marke mit einer vorbestimmten dreidimensionalen Form zur Bestimmung einer Spannung in dem Bauteil aufweist und wobei das Bauteil durch ein generatives Fertigungsverfahren aufgebaut ist.

## Beschreibung

Die vorliegende Erfindung betrifft ein generativ hergestelltes Bauteil mit wenigstens einer Marke und ein Verfahren zum Ausbilden, Reparieren und/oder Austauschen eines derartigen Bauteils mittels eines generativen Fertigungsverfahrens.

Aus der DE 10 2009 055 661 A1 ist bekannt, ein dreidimensionales Objekt schichtweise durch ein generatives Fertigungsverfahren herzustellen.

Ein solches fertiges dreidimensionales Objekt kann erhebliche Eigenspannungen aufweisen, welche nur sehr schwierig zu bestimmen sind.

Vor diesem Hintergrund liegt der Erfindung nun die Aufgabe zugrunde, ein verbessertes Bauteil und ein Verfahren zum Herstellen eines solchen Bauteils bereitzustellen.

Gemäß der Erfindung wird ein Bauteil, insbesondere ein Triebwerksbauteil, bereitgestellt, welches wenigstens eine Marke mit einer vorbestimmten dreidimensionalen Form zur Bestimmung einer Spannung in dem Bauteil aufweist und wobei das Bauteil durch ein generatives Fertigungsverfahren aufgebaut ist.

Des Weiteren wird gemäß der Erfindung ein Verfahren bereitgestellt zum Aufbauen eines Bauteils, insbesondere Triebwerksbauteils, wobei das Verfahren die folgenden Schritte aufweist: Aufbauen des Bauteils durch ein generatives Fertigungsverfahren und Ausbilden wenigstens einer Marke in dem Bauteil, welche eine vorbestimmte dreidimensionale Form zur Bestimmung einer Spannung in dem Bauteil aufweist.

Das Bauteil und das Verfahren zur Herstellung des Bauteils hat den Vorteil, dass die Marke sich aufgrund von Spannungen, wie beispielsweise Eigenspannungen, im Bauteil verformt und dadurch die vorbestimmte Ausgangsform der Marke sich entsprechend verändert und durch zerstörungsfreie Prüfverfahren, wie beispielsweise Ultraschall oder Röntgen-CT erfasst werden kann.

Aus der Veränderung der Ausgangsform der Marke können Spannungen, wie Eigenspannungen, des Bauteils bestimmt werden und auf Basis der Festgestellten Eigenspannungen beispielsweise anschließend Prozessparameter des generativen Fertigungsverfahrens optimiert werden, um die Spannungen in den Bauteilen zu reduzieren. Eine solche Marke kann bei Bedarf später außerdem wieder leicht entfernt werden oder als Spannungssensor in dem Bauteil verbleiben und weiter genutzt werden.

Die der vorliegenden Erfindung zugrunde liegende Erkenntnis/Idee besteht darin, eine Marke mit einer definierten dreidimensionalen Form in dem Bauteil auszubilden, um anhand einer Veränderung der Form der Marke später Spannungen in dem Bauteil mittels zerstörungsfreier Prüfverfahren zu erfassen. Dazu wird der Bereich der Marke während des generativen Aufbaus des Bauteils nicht verfestigt durch Bestrahlung mittels einer Energiestrahlungsquelle, wie z.B. einem Laser oder einer Elektronenstrahlquelle, sondern verbleibt unbestrahlt.

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform ist besteht die Marke aus wenigstens einem Schlitz, einer Kugel und/oder einem Vieleck. Ein Schlitz hat den Vorteil, dass eine Veränderung der Form, wie beispielsweise ein Öffnen oder Schließen des Schlitzes, sehr gut durch Ultraschall oder ein Röntgen-CT nachvollzogen werden kann.

In einer anderen erfindungsgemäßen Ausführungsform weist das Bauteil wenigstens einen Oberflächenabschnitt auf, mit induzierten Druckeigenspannungen. Die Druckeigenspannungen können beispielsweise abhängig von dem Ergebnis, der durch die wenigstens eine Marke festgestellten Spannungen in dem Bauteil, bewertet werden. Die Druckeigenspannungen können beispielsweise mittels Kugelstrahlen, Festwalzen, Laserschockstrahlen und/oder Ultraschallschlagbehandlung in den Oberflächeabschnitt des Bauteils induziert werden.

Gemäß einer anderen Ausführungsform der Erfindung ist die Marke derart ausgebildet oder dimensioniert, dass sie mittels eines zerstörungsfreien Prüfverfahrens, wie mittels eines Ultraschallverfahrens und/oder eines Röntgen-CT-Verfahrens, erfassbar ist. Mittels des Ultraschallverfahrens können Marken mit einem Durchmesser oder einer Breite von beispielsweise zwischen 4µm und 8µm sehr gut erfasst werden. Mittels des Röntgen-CT-Verfahrens können wiederum Marken mit einem Durchmesser oder einer Breite von beispielsweise zwischen 0,1mm und 0,5mm und deutlich größer sehr gut erfasst werden.

In einer erfindungsgemäßen Ausführungsform ist das Bauteil im Bereich der Marke durch das generative Fertigungsverfahren nicht aufgeschmolzen oder verfestigt. das Pulver ist im Bereich der Marke entsprechend nicht durch die Energiestrahlungsquelle bestrahlt.

Gemäß einer Ausführungsform der Erfindung weist das Bauteil mehrere Marken auf, welche gleichmäßig oder ungleichmäßig in dem Bauteil angeordnet sind und wobei die Marken die gleiche Form und/oder Dimensionierung aufweisen oder eine unterschiedliche Form und/oder eine unterschiedliche Dimensionierung. Die Anordnung, Dimensionierung und/oder Form einer Marke kann abhängig von zu einer zu untersuchenden oder zu erwartenden Spannung gewählt werden.

In einer Ausführungsform der Erfindung ist das Bauteil beispielsweise ein Triebwerksbauteil, insbesondere wenigstens ein Teil einer Triebwerksschaufel oder eines Triebwerksgehäuses.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird nachfolgend anhand der in den schematischen Figuren der Zeichnungen angegebenen Ausführungsbeispiele näher erläutert. Es zeigen:
Fig. 1 eine Perspektivansicht eines mittels eines generativen Fertigungsverfahrens hergestelltes Bauteil gemäß einer Ausführungsform der Erfindung;
Fig. 2 eine Perspektivansicht einer Ausführungsform einer Marke des erfindungsgemäßen Bauteils gemäß Fig. 1;
Fig. 3 eine Draufsicht auf einen Ausschnitt des Bauteils und einer seiner Marken gemäß Fig. 1;
Fig. 4 die Draufsicht auf den Ausschnitt des Bauteils und seiner Marke gemäß Fig. 3 in einer Radiographie; und
Fig. 5 ein Ablaufdiagramm eines Ausführungsbeispiels eines Verfahrens zum Herstellen, Reparieren und/oder Austauschen eines Bauteils mit mehreren Marken gemäß der Erfindung

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

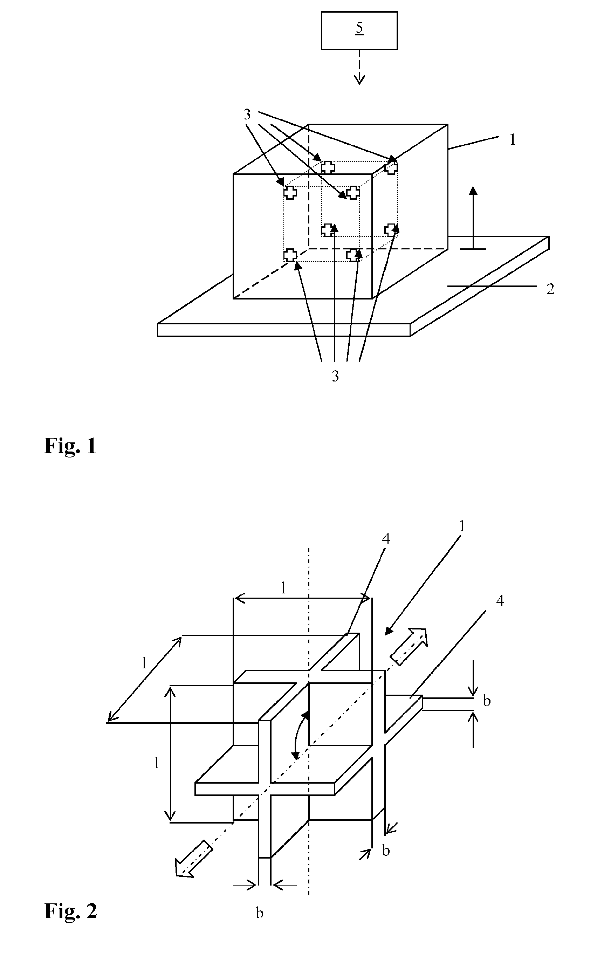

In Fig. 1 ist eine Perspektivansicht eines erfindungsgemäßen Bauteils 1 gezeigt, das mittels eines generativen Fertigungsverfahrens hergestellt ist. Das Bauteil 1 in Fig. 1 ist stark vereinfacht dargestellt.

Generative Fertigungsverfahren sind beispielsweise das sog. Rapid Manufacturing und das sog. Rapid Prototyping usw.. Dabei wird bei den entsprechenden generativen Verfahren, die beispielsweise als Lasersintern, Selective Laser Sintering (SLS), Elektronenstrahlsintern, Electron Beam Melting (EBM), LaserCusing, Selective Laser Melting (SLM) oder 3D-Printing bekannt sind, der hinzuzufügende oder aufzutragende Werkstoff in Pulverform verarbeitet. Gemäß der Erfindung kann beispielsweise ein Pulver aus wenigstens einem Metall, einer Metalllegierung, einem Kunststoff und/oder Keramik eingesetzt werden. Die Erfindung ist jedoch nicht auf die genannten generativen Fertigungsverfahren, sowie den Werkstoff oder die Werkstoffkombination des Pulvers beschränkt.

Beim sog. selektiven Laserschmelzen (engl. Selective Laser Melting (SLM)) als einem Beispiel für ein generatives Fertigungsverfahren wird der zu verarbeitende Werkstoff in Pulverform schichtweise auf einen Träger 2 oder eine Bauplattform aufgebracht. Der pulverförmige Werkstoff der jeweiligen Schicht bzw. Pulverschicht wird anschließend mittels einer geeigneten Energiestrahlung, wie z.B. Laserstrahlung oder Elektronenstrahlung, einer Energiestrahlungsquelle 5 in einem Bauteilbereich des herzustellenden Bauteils lokal vollständig umgeschmolzen und bildet nach der Erstarrung eine feste Materialschicht. Zum Auftragen der nächsten Pulverschicht wird beispielsweise der Träger 2 bzw. die Bauplattform um eine Schichtdicke verfahren, z.B. abgesenkt, und die neue Pulverschicht aufgetragen und anschließend der Bauteilbereich der neuen Pulverschicht durch Laserstrahlung entsprechend verfestigt. Dieser Zyklus wird solange wiederholt, bis alle Schichten umgeschmolzen sind bzw. das fertige Bauteil 1 aus den verfestigten Bauteilbereichen der Pulverschichten hergestellt ist. Anschließend wird das fertige Bauteil 1 von dem überschüssigen Pulver gereinigt und kann je nach Bedarf entweder bearbeitet oder sofort verwendet werden.

Beim Aufbau von generativ hergestellten Bauteilen können nun Spannungen, wie beispielsweise extreme Eigenspannungen, auftreten. Diese sind bislang mittels konventioneller Verfahren, wie beispielsweise Röntgenbeugung, Bohrlochmethode und Neutronenbeugung nur lokal und sehr aufwendig oder gar nicht erfassbar. Dennoch ist die Kenntnis des Eigenspannungszustandes wesentlich, um Prozessparameter für das generative Herstellen der Bauteile optimieren zu können. Solche Prozessparameter sind z.B. Prozessparameter des generativen Fertigungsverfahrens wie z.B. eine Leistung der Energiestrahlungsquelle (z.B. eine Laserleistung eines Laser als Energiestrahlungsquelle), eine Schweißzeit, eine Spurgröße der Energiestrahlungsquelle (z.B. eine Laser-Spurgröße bei einem Laser als Energiestrahlungsquelle), eine Vorwärmtemperatur des Pulvers usw. Die Erfindung ist auf die genannten Prozessparameter nicht beschränkt.

Gemäß der Erfindung werden daher in das generativ herzustellende Bauteil 1 während des generativen Aufbaus im Bauteilvolumen wenigstens eine oder mehrere dreidimensionale Marken 3, insbesondere mikrostrukturierte Marken, eingebracht, wie in Fig. 1 gezeigt ist, zur Bestimmung von in dem Bauteil 1 auftretenden Spannungen. Die Marken 3 mit einer dreidimensionalen, vorbestimmten Form, z.B. einem Kreuzschlitz (wie in Fig. 1 angedeutet ist) usw., können dabei in dem Bauteil 1 gleichmäßig oder ungleichmäßig angeordnet sein, je nach Funktion und Einsatzzweck. Die Marken 3 könnend dabei durch das generative Fertigungsverfahren mit der definierten oder vorbestimmten dreidimensionalen Ausgangsform ausgebildet werden. Das Bauteil wird dabei im Rahmen des generativen Fertigungsverfahrens durch die Energiestrahlung einer Energiestrahlungsquelle 5, wie einem Laser oder einer Elektronenstrahlquelle, nur in seinem Bauteilbereich nicht aber im Bereich seiner wenigstens einen Marke bestrahlt. Der Bereich der Marke 3 im Bauteil 1 wird somit nicht verfestigt.

Bei dem fertigen Bauteil 1 kann anhand der Veränderung der Form oder Ausgangsform der Marke 3 anschließend bestimmt werden, ob und welche Spannungen, z.B. Eigenspannungen, das Bauteil 1 aufweist, da bei auftretenden Spannungen in dem Bauteil 1 sich die Ausgangsform der Marke 3 entsprechend verändert.

Anhand der festgestellten Spannungen, wie beispielsweise Eigenspannungen, des Bauteils 1 können z.B. Prozessparameter des generativen Fertigungsverfahrens, wie die Leistung der Energiestrahlungsquelle usw. entsprechend angepasst werden, um die Spannungen der nachfolgend mittels des generativen Fertigungsverfahrens herzustellenden Bauteile, wie Serienbauteile, zu reduzieren und/oder gezielt einzustellen. Dadurch kann das generative Fertigungsverfahren entsprechend optimiert und die Spannungen in den Bauteilen 1 minimiert und/oder gezielt eingestellt werden.

Das Bauteil 1 mit der wenigstens einen Marke 3 kann dabei als Probebauteil ausgebildet sein. Anhand des Probebauteils 1 und der Auswertung dessen Marke oder Marken 3 werden dann Prozessparameter des generativen Fertigungsverfahrens optimiert. Anschließend können mittels des optimierten Fertigungsverfahrens fertige Bauteile z.B. ohne solche Marken oder mit anderen Marken hergestellt werden, wobei diese Bauteile aufgrund des optimierten generativen Fertigungsverfahrens reduzierte Spannungen, wie beispielsweise Eigenspannungen, aufweisen.

Ebenso kann das Bauteil 1 aber auch als fertiges Bauteil ausgebildet werden und mit einer oder mehreren Marken versehen sein. Die Marken 3 in dem fertigen Bauteil 1 haben den Vorteil, dass sie als Sensoren genutzt werden können zum Bestimmen von Spannungen, wie beispielsweise Eigenspannungen und/oder Lastspannungen usw., des Bauteils 1. Dadurch kann beispielsweise festgestellt werden, wie sich die Spannungen des Bauteils 1 bei verschiedenen Betriebszuständen des Bauteils 1 oder während der Lebensdauer des Bauteils 1 entwickeln oder verändern. Hierbei wird also beispielsweise die Veränderung der Ausgangsform der jeweiligen Marke 3 bei verschiedenen Betriebszuständen oder über einen bestimmten Zeitraum bestimmt und daraus ermittelt, welche Spannungen bei dem Bauteil 1 dabei auftreten.

Ein Beispiel für eine Marke 3 ist in Fig. 2 gezeigt. Fig. 2 zeigt dabei eine Perspektivansicht einer Marke 3, wie sie in das zuvor in Fig. 1 gezeigte Bauteil eingebracht werden kann.

Die kreuzförmige Marke 3 weist dabei als Ausgangsform zwei kreuzförmige, 3-dimensionale Schlitze 4 auf, wobei die Schlitze 4 der Marke 3 z.B. die gleiche Schlitzbreite b und die gleiche Schlitzlänge 1 aufweisen. Wie in Fig. 2 gezeigt ist, sind die zwei kreuzförmigen Schlitze 4 mit ihren Längsachsen 5 beispielsweise senkrecht zueinander ausgerichtet und bilden zusammen die Marke 3. Solche Marken 3 sind derart aufgebaut, dass sie sensitiv auf Spannungen des Bauteils reagieren, die beispielsweise während des generativen Aufbaus des Bauteils oder beim späteren Einsatz des Bauteils entstehen.

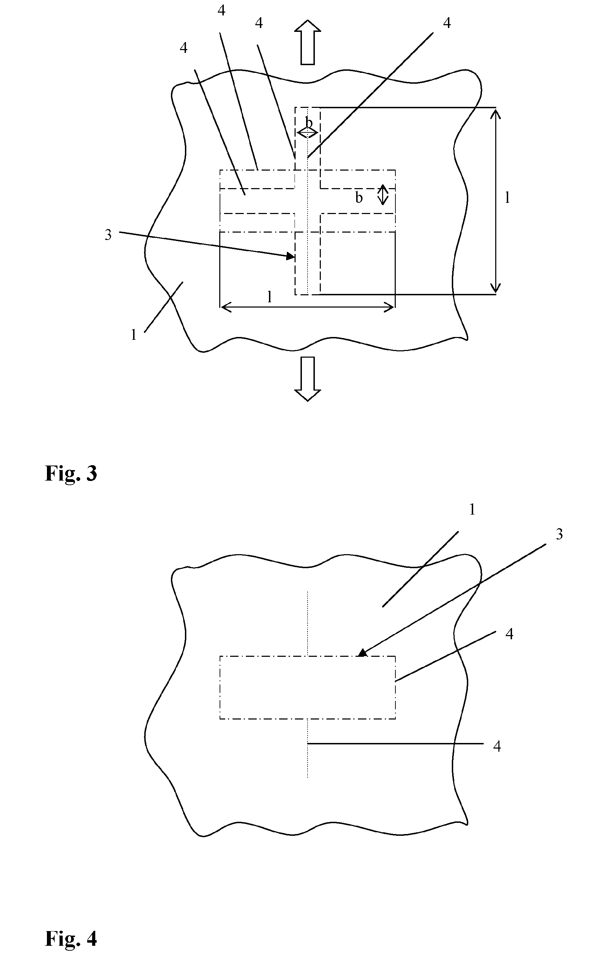

Dabei können nun die kreuzförmigen Schlitze 4 der Marke 3 in Fig. 2 derart in dem Bauteil vorgesehen werden, dass eine auftretende Belastung beispielsweise in Längsrichtung einer der beiden kreuzförmigen Schlitze 4 der Marke 3 wirkt, wie mit den beiden Pfeilen in Fig. 2 angedeutet ist. Dadurch verändern sich die Schlitzbreiten der Marke 3 entsprechend, wie in nachfolgender Fig. 3 gezeigt ist. Aus den veränderten Schlitzbreiten der Marke 3 kann auf auftretende Spannungen in dem Bauteil geschlossen werden. Anhand der bestimmten Spannungen kann dann beispielsweise das generative Fertigungsverfahren derart optimiert werden, dass die Spannungen bei der Fertigung von weiteren Bauteilen mittels des optimierten generativen Fertigungsverfahrens reduziert werden. Ebenso kann die Marke 3 bei dem Bauteil auch als Spannungssensor genutzt werden. Mittels der Marke 3 als Spannungssensor kann beispielsweise bestimmt werden, wo und welche Art von Spannungen in dem Bauteil auftreten, wie stark die Spannungen sind und wie die Spannung sich während der Lebensdauer des Bauteils verändern.

Ein Schlitz 4 der kreuzförmigen Marke 3 kann dabei grundsätzlich eine beliebige Breite aufweisen, sofern die Breite mit einem entsprechenden vorzugsweise zerstörungsfreien Verfahren bestimmbar oder auswertbar ist. Die Breite eines Schlitzes 4 der kreuzförmigen Marke 3 kann beispielsweise in meinem Bereich zwischen 4µm bis 8µm liegen, wenn zum Bestimmen der Schlitzbreite ein Ultraschallverfahren eingesetzt wird. Mittels des Ultraschallverfahrens kann eine Veränderung der Schlitzbreite in dem Bereich von 4µm bis 8µm bestimmt werden. Das funktioniert sogar, wenn die Pulverpartikel des Pulvers zur Herstellung des Bauteils durch ein generatives Fertigungsverfahren selbst größer sind als der Schlitz. Beispielsweise können die Pulverpartikel eine Größe z.B. zwischen 10µm und 80µm und größer aufweisen und die Breite b eines Schlitzes 4 der Marke 3 beispielsweise nur eine Breite b zwischen 4µm bis 8µm. In diesem Fall wird ein Pulverpartikel sozusagen nur außerhalb des Schlitzes 4 während der generativen Fertigung aufgeschmolzen nicht aber im Bereich des Schlitzes 4. In diesem Bereich wird der Pulverpartikel nicht aufgeschmolzen. Ebenso können die Pulverpartikel auch gleich groß oder kleiner als die Schlitzbreite b eines Schlitzes 4 der Marke 3 sein.

Des Weiteren kann ein Schlitz 4 der kreuzförmigen Marke 3 auch eine Breite b beispielsweise in einem Bereich von 0,1 mm bis 0,5mm und größer aufweisen, wenn zum Bestimmen der Schlitzbreite b beispielsweise ein Röntgen-CT-Verfahren eingesetzt wird. Mittels des Röntgen-CT-Verfahrens kann ein Schlitz 4 mit einer Breite b in dem Bereich von z.B. 0,1mm bis 0,5mm problemlos erfasst werden.

Die Erfindung ist auf eine kreuzförmige Marke 3 mit zwei kreuzförmigen Schlitzen 4 (Ausgangsform) nicht beschränkt sondern kann jede beliebige Form aufweisen. Durch Spannungen, wie z.B. Eigenspannungen oder Lastspannungen, verändert sich die Ausgangsform der Marke 3 und aus dieser Änderung der Ausgangsform der Marke 3 kann wiederum auf die im Bauteil vorhandenen Spannungen geschlossen werden. Die Form oder Ausgangsform der Marke 3 kann beliebige variiert werden und beispielsweise kugelförmig, oval und/oder eckig usw. sein.

Dabei kann, wie zuvor beschrieben, das Bauteil als ein Probeteil oder ein fertiges Bauteil mit einer oder mehreren solcher Marken 3 mittels eines generativen Fertigungsverfahrens hergestellt werden. Dabei wird das Pulver (z.B. ein Pulver aus wenigstens einem Metall, einer Metalllegierung, einer Keramik und/oder einem Kunststoff), welches mittels der Energiestrahlungsquelle 5 verfestigbar ist, im Bereich der jeweiligen Marke 3 nicht durch Energiestrahlung einer Energiestrahlungsquelle 5 verfestigt, sondern der Bereich wird ausgespart und dem entsprechend nicht verfestigt. Befindet sich die Marke 3 dabei innerhalb des Bauteils, so wird das nicht verfestige Pulver der Marke 3 nicht entfernt sondern von dem umliegenden durch Energiestrahlung verfestigten Bauteil quasi umschlossen oder verschlossen. Wird die Marke 3 an der Oberfläche des Bauteils ausgebildet, so kann prinzipiell das nicht verfestigte Pulver der Marke 3 wieder entfernt werden, muss es aber nicht.

In Fig. 3 ist eine Draufsicht auf einen Ausschnitt des Bauteils 1 und einer seiner Marke 3 gemäß Fig. 1 gezeigt. Die kreuzförmige Marke 3 ist dabei aus zwei kreuzförmigen Schlitzen 4 ausgebildet, wie zuvor beispielhaft in Fig. 2 gezeigt wurde.

Wie in Fig. 2 und 3 jeweils mit den beiden Pfeilen angedeutet ist, wirkt eine Belastung, z.B. auf grund von Eigenspannungen oder Lastspannungen, beispielsweise in Längsrichtung eines der kreuzförmigen Schlitze 4. Die Schlitze 4 der Marke 3 sind dabei in ihrer Ausgangsform mit einer gestrichelten Linie dargestellt und weisen beispielsweise jeweils die gleiche Schlitzbreite b und Schlitzlänge 1 auf

Die auftretende Belastung führt nun dazu, dass der Schlitz 4, welcher in Richtung der Belastung verläuft zusammengezogen und zumindest teilweise oder im Wesentlichen vollständig geschlossen wird, wie mit einer gepunkteten Linie in Fig. 2 angedeutet ist. Der Schlitz 4 der Marke 3 der wiederum quer zu der Belastung verläuft wird dagegen in die Breite gezogen, wie in Fig. 2 mit einer strichpunktierten Line angedeutet ist.

In Fig. 4 ist die Draufsicht auf den Ausschnitt des Bauteils 1 mit einer seiner kreuzförmigen Marken 3 gemäß Fig. 3 in einer Radiographie gezeigt. Die Radiographie zeigt hierbei die veränderte Rissform der beiden kreuzförmigen Schlitze 4 der Marke 3. Der zusammengezogene in Richtung der Belastung verlaufende Schlitz 4, wie mit einer gepunkteten Linie angedeutet, ist dabei nicht oder kaum sichtbar in der Radiographie. Dagegen ist der auseinander gezogene und quer zu der Belastung verlaufende Schlitz 4, wie mit einer strichpunktierten Linie angedeutet, gut sichtbar in der Radiographie. Anhand der Radiographie kann so bestimmt werden, in welcher Richtung Belastungen oder Spannungen in dem Bauteil 1 auftreten.

Das Radiographie-Verfahren, das Ultraschallverfahren und das Röntgen-CT-Verfahren sind dabei drei von einer Vielzahl von Beispielen für zerstörungsfreie Prüfverfahren, mit denen diese mikrostrukturierten Marken einzeln oder im Verbund bewertet oder ausgewertet werden können. Diese Prüfverfahren liefern so jeweils ein Gesamtbild von Spannungen, wie Eigenspannungen oder Lastspannungen, in einem Bauteil, wie beispielhaft die Radiographie des Bauteils gemäß Fig. 4 zeigt.

Der Vorteil der Erfindung liegt darin, dass eine schnelle und genaue Kenntnis des kompletten Spannungszustandes eines generativ hergestellten Bauteils erhalten werden kann. Dadurch können Herstellungsprozessparameter, wie die des generativen Fertigungsverfahrens, gezielt eingestellt und optimiert werden. So ist es möglich, ein beispielsweise weitgehend eigenspannungsfreies Bauteil 1 herzustellen oder in speziellen Bauteilbereichen Spannungszustände gezielt einzustellen. So können beispielsweise Druckeigenspannungszustände in Randschichten des Bauteils 1 vorgesehen werden durch Bearbeiten einer jeweiligen Randschicht des Bauteils z.B. durch Kugelstrahlen, Festwalzen, Laserschockstrahlen (Lasershockpeening) und/oder Ultraschallschlagbehandlung (UIT).

Diese Marken 3 können bei Bedarf in dem Bauteil 1 auch wieder entfernt oder zumindest verkleinert werden durch einen entsprechenden nachgeschalteten Prozess, wie beispielsweise heiß isostatisches Pressen usw. Durch das heiß isostatische Pressen können die Marken 3 in dem Bauteil 1 teilweise oder ganz aufgelöst werden. Das Vorsehen von Bauteilen 1 mit Marken 3 ist somit sowohl für Erprobungsbauteil bzw. Probebauteile als auch für fertige Bauteile oder Serienbauteile anwendbar.

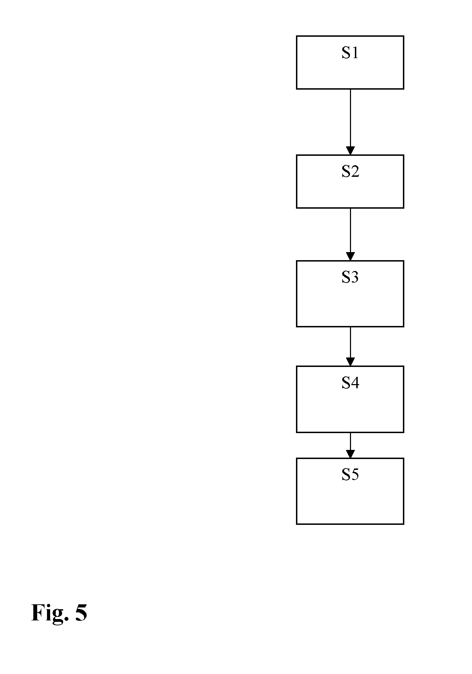

In Fig. 5 ist ein Ablaufdiagramm eines Ausführungsbeispiels eines Verfahrens zum Herstellen, Reparieren und/oder Austauschen eines Bauteils mit einer oder mehreren Marken gemäß der Erfindung gezeigt.

Dabei wird in einem Schritt S1 eine selektiv durch Energiestrahlung zu verfestigende Pulverschicht, beispielsweise eine Metallpulverschicht, auf eine Bauplattform aufgetragen. In einem nächsten Schritt S2 wird die Pulverschicht selektiv verfestigt. Hierzu wird die Pulverschicht mittels einer Energiestrahlung, wie z.B. einem Laserstrahl und/oder einem Elektronenstrahl, einer Energiestrahlungsquelle in einem Bauteilbereich zum Ausbilden des Bauteils verfestigt. Der Bauteilbereich umfasst dabei nicht eine in dem Bauteil vorzusehende Marke. Das bedeutet, dass der Bauteilbereich den Bereich für die Marke nicht umfasst sondern ausspart und somit die Marke im Gegensatz zu dem Bauteilbereich nicht durch Energiestrahlung der Energiestrahlungsquelle verfestigt wird.

Anschließend wird der Schritt S1 wiederholt und die nächste selektiv zu verfestigende Pulverschicht auf die letzte Pulverschicht aufgetragen und der Bauteilbereich der Pulverschicht verfestigt. Die Schritte S1 und S2 werden wiederholt bis das Bauteil mit seiner wenigstens einen Marke vollständig aufgebaut und insbesondere vollständig hergestellt, repariert oder ausgetauscht ist. In einem Schritt S3 wird das Pulver nachdem das Bauteil vollständig aufgebaut ist entfernt. In dem Fall, dass eine Marke in der Oberfläche des Bauteils ausgebildet ist, so kann auch aus der Marke das nicht verfestigte Pulver entfernt werden oder auch nicht.

Wahlweise zusätzlich können in einem Schritt S4 Druckeigenspannungszustände in dem Bauteil vorgesehen werden beispielsweise durch Kugelstrahlen, Festwalzen, Laserschockstrahlen (Lasershockpeening) und/oder Ultraschallschlagbehandlung (UIT) des Bauteils.

Ebenso können zusätzlich oder alternativ später in einem Schritt S5 die Marken teilweise oder ganz geschlossen werden, nachdem beispielsweise Spannungen in dem Bauteil bestimmt wurden. Das teilweise oder vollständige Schließen der Marken kann z.B. durch heißisostatisches Pressen des Bauteils erfolgen.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Insbesondere sind die zuvor beschriebenen Ausführungsbeispiele miteinander kombinierbar, insbesondere einzelne Merkmale davon.

Gemäß der Erfindung können als Bauteile mit wenigstens einer oder mehreren Marken beispielsweise Triebwerkskomponenten, darunter Schaufeln und Gehäuseteile eines Triebwerks, hergestellt werden. Die Triebwerkskomponenten können dabei Teil eines Flugzeugtriebwerks sein. Die Erfindung ist aber auf Triebwerkskomponenten nicht beschränkt.

Marken als Spannungssensoren in fertigen Bauteilen oder Serienbauteilen können dabei sowohl in kritischen und/oder unkritischen Bereichen des jeweiligen Bauteils vorgesehen werden. Hierbei können Spannungen, wie Eigenspannungen, Lastspannungen und andere Spannungen in dem Bauteil, sowie Verformungen des Bauteils mittels einer Marke erfasst werden. Das zuvor beschriebene erfindungsgemäße Bauteil kann aus wenigstens einem Metall, einer Metalllegierung, einer Keramik und/oder einem Kunststoff hergestellt sein.

### Bezugszeichenliste

- 1: Bauteil
- 2: Träger
- 3: Marke
- 4: Schlitz
- 5: Energiestrahlungsquelle

## Patentansprüche

1. Bauteil (1), insbesondere Triebwerksbauteil, welches wenigstens eine Marke (3) mit einer vorbestimmten dreidimensionalen Form zur Bestimmung einer Spannung in dem Bauteil (1) aufweist und wobei das Bauteil (1) durch ein generatives Fertigungsverfahren aufgebaut ist.

2. Bauteil nach Anspruch 1, **dadurch gekennzeichnet, dass** die Marke (3) aus wenigstens einem Schlitz, einer Kugel und/oder einem Vieleck besteht.

3. Bauteil nach Anspruch 1 oder 2, **dadurch gekennzeichnet, dass** das Bauteil (1) wenigstens einen Oberflächenabschnitt mit induzierten Druckeigenspannungen aufweist.

4. Bauteil nach Anspruch 3, **dadurch gekennzeichnet, dass** die Druckeigenspannungen mittels Kugelstrahlen, Festwalzen, Laserschockstrahlen und/oder Ultraschallschlagbehandlung in den Oberflächeabschnitt des Bauteils (1) induziert sind.

5. Bauteil nach Anspruch 4, **dadurch gekennzeichnet, dass** die Marke (3) derart dimensioniert ist, dass die Marke (3) mittels eines zerstörungsfreien Prüfverfahrens erfassbar ist, insbesondere mittels eines Ultraschallverfahrens und/oder eines Röntgen-CT-Verfahrens.

6. Bauteil nach einem der vorhergehenden Ansprüche, **dadurch gekennzeichnet, dass** das Bauteil (1) im Bereich der Marke (3) durch das generative Fertigungsverfahren nicht aufgeschmolzen oder verfestigt ist.

7. Bauteil nach wenigstens einem der vorhergehenden Ansprüche, **dadurch gekennzeichnet, dass** das Bauteil (1) mehrere Marken (3) aufweist, welche gleichmäßig oder ungleichmäßig in dem Bauteil (1) angeordnet sind und wobei die Marken (3) die gleiche Form und/oder Dimensionierung aufweisen oder eine unterschiedliche Form und/oder eine unterschiedliche Dimensionierung.

8. Bauteil nach wenigstens einem der vorhergehenden Ansprüche, **dadurch gekennzeichnet, dass** das Bauteil (1) ein Triebwerksbauteil ist, insbesondere wenigstens ein Teil einer Triebwerksschaufel oder eines Triebwerksgehäuses.

9. Verfahren zum Aufbauen eines Bauteils (1), insbesondere eines Triebwerkbauteils, wobei das Verfahren die folgenden Schritte aufweist:
Aufbauen des Bauteils (1) durch ein generatives Fertigungsverfahren; und
Ausbilden wenigstens einer Marke (3) in dem Bauteil (1), welche eine vorbestimmte dreidimensionale Form zur Bestimmung einer Spannung in dem Bauteil (1) aufweist.

10. Verfahren nach Anspruch 9, **dadurch gekennzeichnet, dass** die Schritte des Aufbauens des Bauteils und des Ausbildens der wenigstens einen Marke ferner die Schritte aufweisen:
Bereitstellen einer Energiestrahlungsquelle (5) zum Verfestigen eines mittels der Energiestrahlungsquelle verfestigbaren Pulvers;
Bereitstellen eines Trägers (2) zur Aufnahme des Pulvers;
Bewegen des Trägers (2) derart, dass eine Pulverschicht des Pulvers auf den Träger (2) aufbringbar ist; und
Verfestigen eines Bauteilsbereichs der Pulverschicht durch die Energiestrahlungsquelle (5), wobei der Bauteilbereich das Bauteil ohne die wenigstens eine Marke (3) umfasst.

11. Verfahren nach Anspruch 10, **dadurch gekennzeichnet, dass** der Durchmesser der Pulverpartikel des Pulvers kleiner, gleich oder größer als der Durchmesser oder die Breite der Marke (3) ist.

12. Verfahren nach Anspruch 9, 10 oder 11, **gekennzeichnet durch** den Schritt:
Zumindest teilweises Verschließen der wenigstens einen Marke (3) **durch** heiß isostatisches Pressen.

13. Verfahren nach Anspruch 9, 10, 11 oder 12, **gekennzeichnet durch** den Schritt:
Induzieren von Druckeigenspannungen in das Bauteil (1) **durch** Kugelstrahlen, Festwalzen, Laserschockstrahlen und/oder Ultraschallschlagbehandlung.
